# FASCICULE DE BREVET EUROPEEN

(11) **EP 2 353 996 B1**
(45) Date de publication et mention de la délivrance du brevet: **06.08.2014**
(21) Numéro de dépôt: 11000216.9
(22) Date de dépôt: 13.01.2011
(51) Int. Cl.: B64C 1/22, B64D 1/22

(54) **Support amovible d'un équipement optionnel externe d'un aéronef et aéronef muni d'un tel support**
Abnehmbarer Träger für optionale Aussenlast und Fluggerät ausgestattet mit dem Träger.
Removable support for carrying an external optional equipment on an aircraft and aircraft fitted with the support.

(30) Priorité: 29.01.2010 FR 1000361
(43) Date de publication de la demande: 10.08.2011
(73) Titulaire: Airbus Helicopters, 13725 Marignane Cedex (FR)
(72) Inventeur: Ferrendier, Sophie, 13320 Bouc Bel Air (FR); Guerard, Patrice, 13122 Ventabren (FR); Somson, Ludovic, 13640 La Roque D`Antheron (FR); Godiot, Patrice, 13880 Velaux (FR); Figoureux, David, 13300 Salon De Provence (FR)
(74) Mandataire: GPI & Associés

(56) Documents cités:
- GB-A- 2 157 647
- US-A- 2 953 330
- US-A- 3 764 105
- US-A- 5 540 402
- US-A- 6 126 113

## Description

La présente invention concerne un support amovible d'un équipement optionnel externe d'un aéronef, et un aéronef muni d'un tel support.

Plus particulièrement, l'invention concerne un support de type support de treuil agencé sur un giravion, un hélicoptère par exemple. Toutefois, ce support est aussi adapté pour porter tout type d'équipement amovible, une caméra, un phare ou encore un haut-parleur notamment

En effet, un giravion peut comporter un support d'équipement amovible apte à porter un treuil par exemple.

Un premier type de support d'équipement comprend un bras de soutènement fixé en un point unique d'une structure de l'aéronef. Le point unique étant destiné à la reprise d'efforts, il est communément appelé « point de reprise ». Ce premier type de support inclut aussi les supports munis d'un bras de soutènement fixé en une unique zone de la structure par une platine.

Le bras de soutènement peut éventuellement être articulé pour faciliter la manoeuvre de l'équipement porté.

Bien que séduisants, les supports d'équipement du premier type à savoir fixés en un point de reprise présentent l'inconvénient de supporter des efforts relativement faibles.

En effet, le point de reprise du bras sur la structure doit impérativement être situé sur une structure porteuse de l'aéronef. Cette structure porteuse est généralement un cadre porteur contenu dans un plan élévation de l'aéronef et disposé sur le côté d'une ouverture du fuselage de l'aéronef, ouverture par laquelle un opérateur manoeuvre par exemple l'équipement soutenu.

Dès lors, le bras de soutènement du support d'équipement s'étend sur une distance importante pour atteindre le point de reprise. Il en résulte un bras de levier important limitant la charge que le support d'équipement est à même de supporter.

De plus, le cadre porteur doit être renforcé fortement au niveau du point de reprise du bras de soutènement.

Le document US4566659 présente un support du premier type articulé pour pouvoir être déplacé dans un plan en élévation de l'aéronef.

On pourrait envisager d'utiliser un support d'un deuxième type fixé à deux points de reprise de la structure de l'aéronef, comme le montre le document GB 2 157 647 A. Cependant, un support fixé en deux points ne parait pas en mesure de supporter des efforts relativement importants. De plus, la structure d'un aéronef est soumise à des efforts aérodynamiques en vol qui tendent à la déformer. Une telle déformation de la structure ne parait pas compatible avec un support fixé à deux points de reprise.

Ainsi, l'état de la technique présente au contraire un support d'équipement d'un troisième type fixé non pas à deux mais à trois points de reprise de la structure, deux points de reprise dans une partie supérieure au dessus d'une ouverture latérale du fuselage et un point de reprise dans une partie inférieure, située sous ladite ouverture ou sur un cadre porteur de la structure porteuse de l'aéronef.

Le document US6488236 présente un support du troisième type muni d'un bras lié à arbre de fixation, une partie inférieure de cet arbre étant solidarisée à un premier point de reprise d'un plancher alors qu'une partie supérieure de cet arbre est solidarisée à un deuxième point de reprise d'un plafond. De plus, le support est pourvu d'une bielle fixée à un troisième point de reprise.

Cette architecture à trois points de reprise est intéressante car elle permet de soutenir des charges importantes. Néanmoins, on comprend qu'elle est encombrante et lourde, ce qui est pénalisant pour une application aéronautique.

Par ailleurs, le document GB 2157647 présente un dispositif muni d'un plateau horizontal coopérant avec un plateau vertical pour porter des charges.

Le document US 3764105 est éloigné de l'invention en présentant un dispositif pour permettre le changement d'une roue d'un aéronef.

Le document US 6126113 montre un hélicoptère muni d'une structure en nid d'abeille.

Le document US 5540402 présente une poutre portant un filet Le document US 2953330 présente une structure parallélépipédique suspendue à un aéronef.

La présente invention a alors pour objet de proposer un support du deuxième type d'un équipement optionnel externe d'un aéronef permettant de porter des charges lourdes, n'occupant pas un espace important et n'engendrant pas une augmentation massique élevée de l'aéronef.

Selon l'invention, un support amovible d'un équipement optionnel d'un aéronef est remarquable en ce qu'il comporte une poutre allongée, munie d'au moins un point d'accrochage d'un équipement et s'étendant d'une première portion extrémale vers une deuxième portion extrémale. De plus, ce support est pourvu d'une part d'un premier moyen de fixation muni d'un premier bras de fixation lié à un premier bras de liaison qui est fixé de manière amovible à la première portion extrémale de la poutre et, d'autre part d'un deuxième moyen de fixation muni d'un deuxième bras de fixation lié à un deuxième bras de liaison qui est fixé de manière amovible à ladite deuxième portion extrémale. De plus, une première bielle de soutien du premier moyen de fixation relie le premier bras de fixation au premier bras de liaison, une deuxième bielle de soutien du deuxième moyen de fixation reliant le deuxième bras de fixation au deuxième bras de liaison

Les bras de fixation peuvent alors être chacun fixé à un cadre porteur d'un aéronef. Par conséquent, le support est un support fixé de manière amovible à deux points de reprise d'une structure d'un aéronef par exemple.

De plus, chaque moyen de fixation a une structure triangulaire conférée par son bras de fixation, son bras de liaison et sa bielle de soutien. Dès lors, le support est un support à deux points de reprise apte à porter des charges importantes sans nécessiter l'emploi d'un troisième point de reprise.

Le support peut aussi inclure une ou plusieurs des caractéristiques qui suivent.

Par exemple, au moins un moyen de fixation comporte un moyen d'accrochage additionnel. Par exemple, le support comprend indifféremment un moyen d'accrochage, tel qu'une bague manille, sur le premier moyen de fixation et/ou le deuxième moyen de fixation. Ce moyen d'accrochage additionnel peut servir à l'accrochage d'une caméra ou tout autre équipement tel qu'une corde par exemple.

Selon un autre aspect, le bras de fixation d'un moyen de fixation est articulé au bras de liaison de ce moyen de fixation. Eventuellement, chaque moyen de fixation peut posséder une rotule principale entre son bras de fixation et son bras de liaison.

L'articulation de chaque moyen de fixation entre ses bras de fixation et de liaison confère au support une bonne faculté à absorber les déformations statiques et dynamiques de la structure.

De plus, cette articulation permet de compenser des éventuelles dérives de fabrication. En effet, suivant les tolérances de fabrication des cadres porteurs accueillant les premier et deuxième moyens de fixation, il peut être difficile de monter le support sur l'aéronef. L'articulation de chaque moyen de fixation entre ses bras de fixation et de liaison offre alors une liberté de mouvement à un opérateur et facilite de manière non négligeable l'installation du support.

Selon une variante, le bras de fixation d'un moyen de fixation est articulé au bras de liaison de ce moyen de fixation par une articulation d'assemblage munie d'une douille traversant un élément sphérique selon un axe d'assemblage, l'articulation d'assemblage tolérant un mouvement sur une distance maximale donnée dudit bras de fixation par rapport audit bras de liaison selon ledit axe d'assemblage.

De même, au moins une bielle de soutien d'un moyen de fixation est articulée d'une part au bras de fixation et d'autre part au bras de liaison de ce moyen de fixation.

En outre, chaque moyen de fixation étant muni d'un bras de fixation et d'un bras de liaison, au moins un moyen de fixation comporte une bielle de soutien articulée d'une part au bras de fixation et d'autre part au bras de liaison.

Selon un aspect de l'invention, le bras de fixation d'un moyen de fixation s'étendant d'une première extrémité distale vers une première extrémité proximale, le bras de liaison dudit moyen de fixation comportant une deuxième extrémité proximale articulée à ladite première extrémité proximale et une deuxième extrémité distale fixée de manière amovible à la poutre, la bielle de soutien du moyen de fixation est articulée d'une part au bras de fixation entre la première extrémité distale et la première extrémité proximale et d'autre part au bras de liaison entre la deuxième extrémité proximale et la deuxième extrémité distale fixée de manière amovible à la poutre.

Il est noté que les termes « proximale » et « distale » sont utilisés pour le bras de liaison en référence au bras de fixation. De même, les termes « proximale » et « distale » sont utilisés pour le bras de fixation en référence au bras de liaison.

Au moins une bielle de soutien peut aussi s'étendre sur une distance réglable et permet alors notamment de régler la position du bras de liaison par rapport au bras de fixation, à savoir l'angulation séparant le bras de liaison du bras de fixation. Ainsi, on peut régler précisément la position de la poutre soutenant l'équipement optionnel.

De plus, le réglage de la bielle de soutien se justifie aussi d'un point de vue installation du support. En effet, en réglant cette bielle de soutien, un opérateur peut compenser d'éventuelles dérives de fabrication des cadres porteurs par exemple.

Selon une variante, chaque bras de fixation coopère directement avec un cadre porteur, en ayant par exemple un pion de fixation pénétrant dans un orifice de fixation du cadre porteur.

Selon une autre variante, le support comporte au moins un renfort de cadre apte à être agencé dans un cadre porteur d'une structure, le renfort coopérant avec un bras de fixation d'un moyen de fixation.

Ainsi, chaque renfort peut inclure un orifice de fixation qui coopère avec un pion de fixation d'un bras de fixation.

En outre, au moins un moyen de fixation peut comporter un doigt inséré dans un longeron de la poutre pour optimiser la fixation de la poutre au moyen de fixation.

Par ailleurs, la poutre comporte optionnellement au moins une lumière apte à accueillir une bague de soutien dudit équipement optionnel. L'équipement optionnel est alors emmanché dans la poutre. Un arbre de fixation peut traverser la lumière.

De plus, le support peut comporter une bague de soutien qui coopère avec ladite lumière et l'équipement à porter pour favoriser le maintien de cet équipement, chaque bague de soutien étant agencée dans la lumière entre la poutre et l'équipement.

Selon un autre aspect, la poutre comporte au moins un longeron qui délimite la lumière, ce longeron étant fixé de manière amovible à un moyen de fixation. Plus précisément, la lumière est ménagée dans le corps du longeron, ce longeron coopérant avec le moyen de fixation. L'équipement optionnel supporté est alors relié à un cadre porteur par des éléments résistants à savoir le longeron et le moyen de fixation.

On comprend que la poutre peut être un organe monobloc usiné dans la masse, le longeron provenant de cet usinage. A titre de variante, la poutre peut posséder plusieurs organes coopérant les uns avec les autres, tels qu'un longeron et des nervures disposés entre un revêtement supérieur et un revêtement inférieur.

Enfin, la poutre est au moins partiellement creuse afin de pouvoir enserrer en son sein des câblages électriques aptes à être reliés à l'équipement optionnel.

Outre un support d'équipement, l'invention vise un aéronef, un giravion notamment pourvu d'un support amovible d'équipement.

Ainsi, selon l'invention un aéronef est muni d'un premier et d'un deuxième cadres porteurs d'un fuselage, chaque cadre porteur étant contenu dans un plan en élévation de l'aéronef, un premier montant en élévation du premier cadre porteur et un deuxième montant en élévation du deuxième cadre porteur étant disposés de part et d'autre d'une ouverture dudit fuselage donnant sur un milieu extérieur à l'aéronef, le premier montant en élévation s'étendant d'une première partie inférieure située à une base de ladite ouverture vers une première partie supérieure située à un sommet de ladite ouverture, le deuxième montant en élévation s'étendant d'une deuxième partie inférieure située à la base de ladite ouverture vers une deuxième partie supérieure située au sommet de ladite ouverture.

Cet aéronef comporte alors un support amovible d'un équipement optionnel selon l'invention tel que décrit précédemment, le support comportant une poutre allongée munie d'au moins un point d'accrochage d'un équipement et s'étendant d'une première portion extrémale vers une deuxième portion extrémale, ce support étant pourvu d'un premier moyen de fixation muni d'un premier bras de fixation lié à un premier bras de liaison qui est fixé de manière amovible à la première portion extrémale et d'un deuxième moyen de fixation muni d'un deuxième bras de fixation lié à un deuxième bras de liaison qui est fixé de manière amovible à la deuxième portion extrémaie, une première bielle de soutien reliant de plus le premier bras de fixation au premier bras de liaison et une deuxième bielle de soutien reliant le deuxième bras de fixation au deuxième bras de liaison le premier bras de fixation étant fixé de manière amovible à la première partie supérieure et le deuxième bras de fixation étant fixé à la deuxième partie supérieure afin que la poutre s'étende en regard du sommet de l'ouverture.

L'invention et ses avantages apparaîtront avec plus de détails dans le cadre de la description qui suit avec des exemples de réalisation donnés à titre illustratif en référence aux figures annexées qui représentent :
- la figure 1, un aéronef selon l'invention,
- la figure 2, un schéma présentant en perspective un support selon l'invention,
- la figure 3, une vue de dessus des premier et deuxième moyens de fixation,
- la figure 4, une coupe d'une bielle de soutien,
- la figure 5, une coupe d'une poutre, et
- la figure 6, une vue d'un renfort de cadre.

Les éléments présents dans plusieurs figures distinctes sont affectés d'une seule et même référence.

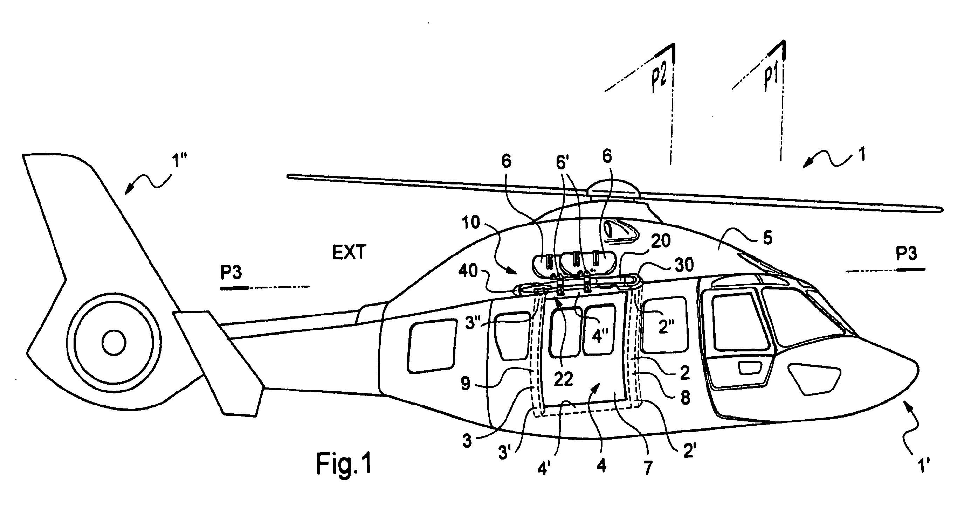

La figure 1 présente un aéronef 1, à savoir un hélicoptère, s'étendant d'une pointe avant 1' vers une queue 1". Cet aéronef comporte un fuselage 5 porté notamment par un premier cadre porteur 2 et un deuxième cadre porteur 3.

Ces premier et deuxième cadres porteurs 2, 3 sont représentés en pointillés sur la figure 1 dans la mesure où ils sont insérés dans le fuselage 5.

Le fuselage 5 comprend une ouverture 4 donnant sur un milieu extérieur EXT à l'aéronef, afin de permettre à des passagers de pénétrer dans une cabine ou à un opérateur d'effectuer une opération de treuillage en vol par exemple. Cette ouverture 4 est éventuellement fermée par une porte coulissante 7. De plus, on constate qu'un premier montant en élévation 8 du premier cadre porteur 2 et un deuxième montant en élévation 9 du deuxième cadre porteur 3 sont agencés de part et d'autre de l'ouverture 4.

Dès lors, le premier montant en élévation 8 s'élève à partir d'une première partie inférieure 2' située au niveau de la base 4' de l'ouverture 4 vers une première partie supérieure 2" située au niveau du sommet 4" de l'ouverture 4. Le premier montant en élévation 8 et le premier cadre porteur 2 associé sont alors contenus dans un premier plan en élévation P1 délimitant l'ouverture 4, en étant agencés en amont de cette ouverture 4, selon une direction allant de la pointe avant 1' vers la queue 1".

De même, le deuxième montant en élévation 9 s'élève à partir d'une deuxième partie inférieure 3' située au niveau de la base 4' de l'ouverture 4 vers une deuxième partie supérieure 3" située au niveau du sommet 4" de l'ouverture 4. Le deuxième montant en élévation 9 et le deuxième cadre porteur 3 associé sont alors contenus dans un deuxième plan en élévation P2 délimitant l'ouverture 4, en étant agencé en aval de cette ouverture 4, selon une direction allant de la pointe avant 1' vers la queue 1".

Les première et deuxième parties inférieures 2', 3' reposent alors sur un plancher dénommé « plancher cabine » alors que les première et deuxième parties supérieures 2", 3" sont liées par un plafond dénommé « plancher moteur » par l'homme du métier.

L'aéronef 1 schématisé est équipé d'un support 10 amovible, apte à porter des équipements 6 de type treuils par exemple.

Ce support 10 comprend une poutre 20 longiligne portant les équipements 6, une bague de soutien par équipement coopérant avec une lumière de la poutre 20.

De plus, une première zone extrémale 21 de la poutre 20 est fixée de manière amovible à la première partie supérieure 2" du premier montant en élévation 8 par un premier moyen de fixation 30, alors que la deuxième zone extrémale 22 de la poutre 20 est fixée de manière amovible à la deuxième partie supérieure 3" du deuxième montant en élévation 9 par un deuxième moyen de fixation 40.

Ainsi, cette poutre 20 est agencée dans plan de soutènement P3 perpendiculaire au premier plan en élévation P1 et au deuxième plan en élévation P2 et saille du fuselage 5 vers l'extérieur de l'aéronef 1. De plus, la poutre 20 surplombe l'ouverture 4 en s'étendant d'un côté à un autre côté de cette ouverture 4 en regard de son sommet 4".

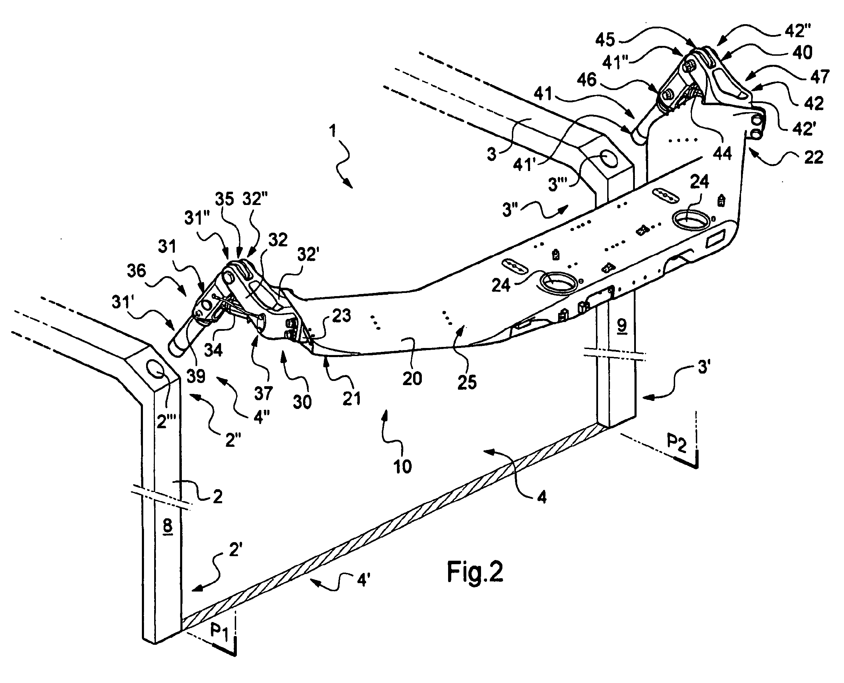

La figure 2 présente une vue en perspective du support 10.

Ce support 10 comporte une poutre 20 munie d'au moins un longeron 23 ainsi qu'un revêtement 25 enserrant ce longeron 23. De plus, cette poutre est munie de deux lumières 24 pouvant chacune accueillir une bague de soutien 6' de l'équipement 6 à porter. Le longeron 23 peut comporter une ou plusieurs branches.

Il est à noter que la poutre peut être monobloc et donc constituée d'un seul tenant, le revêtement et le longeron constituant une unique pièce usinée dans la masse. Selon une autre variante, la poutre est un assemblage d'une pluralité d'organes.

Par ailleurs, la poutre 20 s'étend d'une première portion extrémale 21 vers une deuxième portion extrémale 22. Le support 10 comprend alors un premier moyen de fixation 30 apte à fixer de manière amovible la première portion extrémale 21 à une première partie supérieure 2" d'un premier montant en élévation 8, et un deuxième moyen de fixation 40 apte à fixer de manière amovible la deuxième portion extrémale 22 à une deuxième partie supérieure 3" d'un deuxième montant en élévation 9.

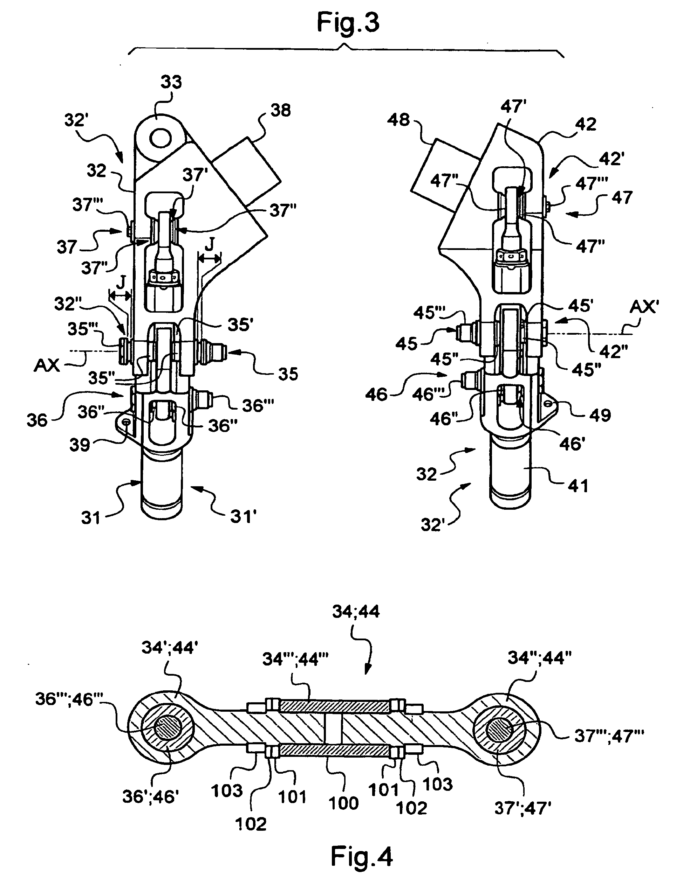

Les figures 2 et 3 montrent les premier et deuxième moyens de fixation 30, 40, ces moyens de fixation 30, 40 étant représentés en perspective et fixés à la poutre 10 sur la figure 2 et vue de dessus hors poutre 10 sur la figure 3.

Le premier moyen de fixation 30 comporte un premier bras de fixation 31 lié à un premier bras de liaison 32.

Le premier bras de fixation 31 s'étend d'une première extrémité distale 31' vers une première extrémité proximale 31". La première extrémité distale 31' est apte à coopérer avec le premier cadre porteur 2, directement via un premier orifice 2'" de ce premier cadre porteur dans lequel cette première extrémité distale 31' est agencée, ou indirectement via un renfort de cadre.

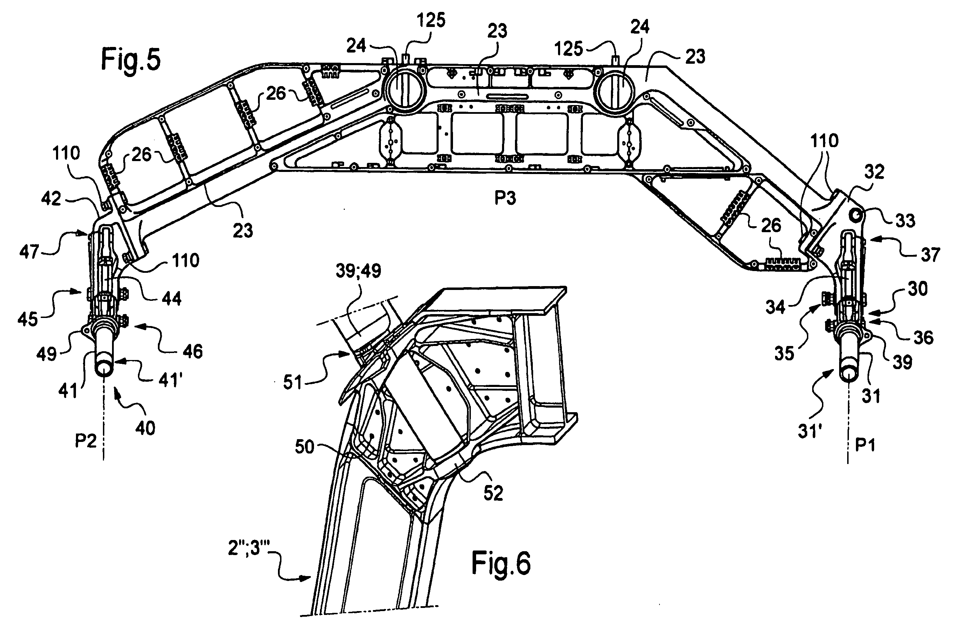

Par ailleurs, le premier bras de liaison 32 est sensiblement contenu dans le plan de soutènement P3 contenant la poutre 20. De plus, ce premier bras de liaison 32 s'étend d'une deuxième extrémité proximale 32" vers une deuxième extrémité distale 32'. Ainsi, la deuxième extrémité proximale 32" du premier bras de liaison 32 est articulée par une rotule principale à la première extrémité proximale 31", la deuxième extrémité distale 32' étant fixée à un longeron 23 de la poutre 20 via des vis 110 visibles sur la figure 5 et un doigt de maintien non visible sur la figure 2.

Le premier moyen de fixation est donc fixé de manière amovible à la première portion extrémale 21 de la poutre 20.

De plus, le premier moyen de fixation 30 comporte une première bielle de soutien 34 liée par des articulations au premier bras de fixation 31 et au premier bras de liaison 32. Cette première bielle de soutien permet notamment de positionner le premier bras de fixation par rapport au premier bras de liaison afin que la poutre 20 soit dans la position requise. De plus, la première bielle de soutien 34 confère au premier moyen de fixation 30 une structure triangulaire, cette structure triangulaire permettant au premier moyen de fixation de supporter des efforts importants.

Dès lors, une première rotule secondaire 36 du premier moyen de fixation 30 lie la première bielle de soutien 34 au premier bras de fixation 31, cette première rotule secondaire 36 du premier moyen de fixation 30 étant disposée entre la première extrémité distale 31' et la première extrémité proximale 31" du premier bras de fixation 31 du premier moyen de fixation 30. De plus, une deuxième rotule secondaire 37 du premier moyen de fixation 30 lie la première bielle de soutien 34 au premier bras de liaison 32, cette deuxième rotule secondaire 37 du premier moyen de fixation 30 étant disposée entre la deuxième extrémité distale 32' et la deuxième extrémité proximale 32" du premier bras de liaison 32 du premier moyen de fixation 30.

De même, le deuxième moyen de fixation 40 comporte un deuxième bras de fixation 41 lié à un deuxième bras de liaison 42.

Le deuxième bras de fixation 41 s'étend d'une première extrémité distale 41' vers une première extrémité proximale 41". La première extrémité distale 41' du deuxième bras de fixation est apte à coopérer avec le deuxième cadre porteur 3, directement via un deuxième orifice 3"' de ce deuxième cadre porteur dans lequel cette première extrémité distale 41' est agencée, ou indirectement via un renfort de cadre.

Par ailleurs, le deuxième bras de liaison 42 du deuxième moyen de fixation 40 est sensiblement contenu dans le plan de soutènement P3 contenant la poutre 20 et s'étend d'une deuxième extrémité proximale 42" vers une deuxième extrémité distale 42'. Ainsi, la deuxième extrémité proximale 42" du deuxième bras de liaison 42 est articulée par une rotule principale à la première extrémité proximale 41" du deuxième bras de fixation 41, la deuxième extrémité distale 32' étant fixée à un longeron 23 de la poutre 20 via des vis et un doigt de maintien non visible sur la figure 2. Le deuxième moyen de fixation est donc fixé de manière amovible à la deuxième portion extrémale 22 de la poutre 20.

De plus, le deuxième moyen de fixation 40 comporte une deuxième bielle de soutien 44 liée par des articulations au deuxième bras de fixation 41 et au deuxième bras de liaison 42 pour notamment positionner le deuxième bras de fixation par rapport au deuxième bras de liaison afin que la poutre 20 soit dans la position requise. La deuxième bielle de soutien 44 confère aussi au deuxième moyen de fixation 40 une structure triangulaire, cette structure triangulaire permettant au deuxième moyen de fixation 40 de supporter des efforts importants.

Dès lors, une première rotule secondaire 46 du deuxième moyen de fixation 40 lie la deuxième bielle de soutien 44 au deuxième bras de fixation 41, cette première rotule secondaire 46 du deuxième moyen de fixation 40 étant disposée entre la première extrémité distale 41' et la première extrémité proximale 41" du deuxième bras de fixation 41 du deuxième moyen de fixation 40. De plus, une deuxième rotule secondaire 47 du deuxième moyen de fixation 40 lie la deuxième bielle de soutien 44 au deuxième bras de liaison 42, cette deuxième rotule secondaire 47 du deuxième moyen de fixation 40 étant disposée entre la deuxième extrémité distale 42' et la deuxième extrémité proximale 42" du deuxième bras de liaison 42 du deuxième moyen de fixation 40.

On comprend donc que selon la réalisation préférée, schématisée sur la figure 2, chaque moyen de fixation 30, 40 ayant un bras de fixation 31, 41 s'étendant d'une première extrémité distale 31', 41' vers une première extrémité proximale 31", 41" ainsi qu'un bras de liaison 32, 42 comportant une deuxième extrémité proximale 32", 42" articulée à ladite première extrémité proximale 31", 41" et une deuxième extrémité distale 32', 42' fixée de manière amovible à ladite poutre 20, une bielle de soutien 34, 44 est articulée d'une part au bras de fixation 31, 41 entre la première extrémité distale 31', 41' et la première extrémité proximale 31", 41" d'un moyen de fixation et d'autre part au bras de liaison 32, 42 entre ladite deuxième extrémité proximale 32", 42" et la deuxième extrémité distale 32', 42' de ce moyen de fixation.

En référence à la figure 3, chaque rotule principale 35, 45 d'une articulation d'assemblage peut comporter un élément sphérique 35', 45' disposé dans une cage externe solidarisée à la première extrémité proximale 31", 41" d'un bras de fixation.

Le premier élément sphérique 35' du premier moyen de fixation 30 est enserré entre deux entretoises 35" traversant deux joues d'une chape de la deuxième extrémité proximale 32" du premier bras de liaison associé. Le premier ensemble comprenant l'élément sphérique 35' et les entretoises associées 35" est alors traversé par une douille de fixation 35"' s'étendant selon un axe d'assemblage AX.

On note que chaque entretoise 35" a une liberté de mouvement par rapport à la chape associée, un jeu J pouvant séparer une tête de l'entretoise et ladite chape associée.

Il en résulte que la première rotule principale 35 peut se déplacer le long de l'axe d'assemblage AX entre les joues de la chape du premier bras de liaison 32. Pour faciliter le montage du support sur l'aéronef, un opérateur peut alors déplacer le premier bras de liaison 32 par rapport au premier bras de fixation 31 selon l'axe d'assemblage AX sur une distance maximale donnée, de l'ordre du centimètre par exemple.

A l'inverse, le deuxième élément sphérique 45' du deuxième moyen de fixation 45 est enserré entre deux bagues 45" par exemple collées aux joues d'une chape de la deuxième extrémité proximale 42" du deuxième bras de liaison associé. Le deuxième ensemble comprenant le deuxième élément sphérique 45' et les bagues associées 45" est alors traversé par un axe de fixation 45"'. Les bagues 45" étant collées aux chapes, le deuxième élément sphérique 45' n'est pas en mesure d'effectuer une translation selon un axe d'assemblage AX' selon lequel s'étend l'axe de fixation 45"'.

De plus, chaque première rotule secondaire 36, 46 peut comporter un élément sphérique 36', 46' disposé dans une cage externe solidarisée à une bielle de soutien 34, 44. Cet élément sphérique 36', 46' est enserré entre deux bagues 36", 46" collées par exemple à la périphérie d'un perçage du bras de fixation 31, 41 correspondant, entre la première extrémité distale 31', 41' et la première extrémité proximale 31". 41" de ce bras de fixation 31, 41. L'ensemble comprenant l'élément sphérique 36', 46' et les bagues associées 36", 46" est alors traversé par un axe de fixation 36"', 46"'.

De même, chaque deuxième rotule secondaire 37, 47 peut comporter un élément sphérique disposé dans une cage externe solidarisée à une première bielle de soutien 34, 44. Cet élément sphérique 37', 47' est enserré entre deux bagues 37", 47" collées par exemple à la périphérie d'un perçage du bras de liaison 32, 42 correspondant, entre la deuxième extrémité distale 32', 42' et la deuxième extrémité proximale 32", 42" de ce bras de liaison 32, 42. L'ensemble comprenant l'élément sphérique 37', 47' et les bagues associées 37", 47" est alors traversé par un axe de fixation 37"', 47"'.

En outre, au moins un moyen de fixation 30, 40 comprend un doigt 38, 48 qui coopère avec un longeron 23 de la poutre.

Ainsi, le premier bras de liaison 32 peut comporter à sa deuxième extrémité distale 32" un premier doigt 38 apte à pénétrer dans un premier orifice de centrage d'un longeron 23 de la poutre 20. Pour fixer le premier moyen de fixation 30 à la première zone extrémale 21 de la poutre, on insère par exemple le premier doigt 38 dans le premier orifice de centrage puis on utilise des moyens de type vis pour solidariser le premier bras de liaison au longeron 23. De même, le deuxième bras de liaison 42 peut comporter à sa deuxième extrémité distale 42" un deuxième doigt 48 apte à pénétrer dans un deuxième orifice de centrage d'un longeron 23 de la poutre 20.

Par ailleurs, au moins un moyen de fixation comporte un moyen d'accrochage additionnel, tel qu'une bague de type manille par exemple dénommée « bague manille » par commodité.

En référence à la figure 3, la deuxième extrémité distale 32" du premier bras de liaison 32 inclut une bague manille 33 d'un moyen d'accrochage. A titre de variantes non représentées, seul le deuxième bras de liaison 42 comporte un tel moyen d'accrochage, chaque bras de liaison comporte ce moyen d'accrochage, ou encore au moins un bras de fixation comporte ledit moyen d'accrochage.

Enfin, on constate que le premier bras de fixation comporte un premier épaulement 39 pour sa fixation à un cadre porteur, le deuxième bras de fixation ayant un deuxième épaulement 49 à cet effet.

La figure 4 présente une bielle de soutien 34, 44 selon l'invention.

Cette bielle de soutien est munie d'un premier et d'un deuxième embouts à rotule 34',44'- 34", 44", chaque embout enserrant un élément sphérique 36"', 46"', 37"', 47"' d'une rotule dans une cage externe.

De plus, la bielle de soutien comporte un corps dans lequel sont vissés les premier et deuxième embouts. Un ensemble muni d'un frein d'écrou 101, d'une rondelle 102 et d'un écrou maintient chaque embout en position. La bielle de soutien s'étend alors sur une distance réglable.

La figure 5 présente une coupe d'une poutre.

On note que la poutre 20 possède un longeron 23 allant de sa première zone extrémale 21 à sa deuxième zone extrémale 22. Deux lumières 24 sont réalisées dans ce longeron 23 pour permettre la fixation d'un équipement 6 au support. Un axe 125 peut traverser chaque lumière 24 et l'équipement 6, ou du moins une bague de fixation 6' de cet équipement, pour optimiser la fixation. Le longeron 23 délimite donc chaque lumière 24.

Par ailleurs, la figure 5 montre la fixation de chaque moyen de fixation 30, 40 par l'intermédiaire de vis 110 coopérant avec le longeron 23 notamment.

En outre, la poutre 20 est partiellement creuse, à savoir à l'intérieur de son revêtement extérieur soutenu par ledit longeron 23. Dès lors, des câblages électriques peuvent être disposés à l'intérieur de la poutre 20.

Favorablement, on équipe donc la poutre d'une pluralité de peignes 26 pour guider les câblages.

En référence à la figure 2, les premières extrémités distales 31', 41' des premier et deuxième bras de fixation 31, 41 peuvent être insérées dans des orifice des premier et deuxième montants en élévation 8, 9. En complément, des épaulements 39, 49 de ces premières extrémités distales 31', 41' sont vissés auxdits montants en élévation 8, 9.

En référence à la figure 6, selon une autre réalisation, le support comporte au moins un renfort 50.

Un tel renfort 50 comprend une ossature disposée dans un espace vide du cadre, et notamment de la partie supérieure 2", 3" d'un montant en élévation 8, 9 du cadre porteur 2, 3.

Le renfort est alors pourvu d'un orifice 51 permettant le passage de la première extrémité distale 31', 41' d'un bras de fixation et d'un socle 52 accueillant le pied de cette première extrémité distale 31', 41'.

L'éventuel épaulement 39, 49 de la première extrémité distale 31', 41' d'un bras de fixation est alors fixé au renfort par des moyens usuels, par vissage par exemple.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Support (10) amovible d'un équipement (6) optionnel d'un aéronef (1), ledit support (10) comportant une poutre (20) allongée munie d'au moins un point d'accrochage d'un équipement et s'étendant d'une première portion extrémale (21) vers une deuxième portion extrémale (22), ce support (10) est pourvu d'un premier moyen de fixation (30) muni d'un premier bras de fixation (31) lié à un premier bras de liaison (32) qui est fixé de manière amovible à ladite première portion extrémale (21) et d'un deuxième moyen de fixation (40) muni d'un deuxième bras de fixation (41) lié à un deuxième bras de liaison (42) qui est fixé de manière amovible à ladite deuxième portion extrémale (22), une première bielle de soutien (34) reliant de plus le premier bras de fixation (31) au premier bras de liaison (32) et une deuxième bielle de soutien (44) reliant le deuxième bras de fixation (41) au deuxième bras de liaison (42), au moins une bielle de soutien (34, 44) d'un moyen de fixation étant articulée d'une part au bras de fixation (31, 41) et d'autre part au bras de liaison (32, 42) de ce moyen de fixation, ledit bras de fixation (31, 41) s'étendant d'une première extrémité distale (31', 41') vers une première extrémité proximale (31", 41"),
**caractérisé en ce que** le bras de liaison (32, 42) comporte une deuxième extrémité proximale (32", 42") articulée à ladite première extrémité proximale (31", 41") du bras de fixation et une deuxième extrémité distale (32', 42') fixée de manière amovible à ladite poutre (20), ladite bielle de soutien (34, 44) étant articulée d'une part au bras de fixation (31, 41) entre ladite première extrémité distale (31', 41') et ladite première extrémité proximale (31", 41") et d'autre part au bras de liaison (32, 42) entre ladite deuxième extrémité proximale (32", 42") et ladite deuxième extrémité distale (32', 42') fixée de manière amovible à ladite poutre (20).

2. Support selon la revendication 1,
**caractérisé en ce qu'**au moins un moyen de fixation (30) comporte un moyen d'accrochage (33) additionnel.

3. Support selon l'une quelconque des revendications précédentes,
**caractérisé en ce que** le bras de fixation (31, 41) d'un moyen de fixation est articulé au bras de liaison (32, 42) de ce moyen de fixation.

4. Support selon la revendication 3,
**caractérisé en ce que** le bras de fixation (31) d'un moyen de fixation (30) est articulé au bras de liaison (32) de ce moyen de fixation par une articulation d'assemblage munie d'une douille (35"') traversant un élément sphérique (35') selon un axe d'assemblage (AX), ladite articulation d'assemblage tolérant un mouvement sur une distance maximale donnée dudit bras de fixation (31) par rapport audit bras de liaison (32) selon ledit axe d'assemblage (AX).

5. Support selon l'une quelconque des revendications précédentes,
**caractérisé en ce qu'**au moins une bielle de soutien s'étend sur une distance réglable.

6. Support selon l'une quelconque des revendications 1 à 5,
**caractérisé en ce qu'**il comporte au moins un renfort (50) de cadre apte à être agencé dans un cadre porteur (2, 3), ledit renfort (50) coopérant avec un bras de fixation (31, 41) d'un moyen de fixation (30, 40).

7. Support selon l'une quelconque des revendications précédentes,
**caractérisé en ce qu'**au moins un moyen de fixation (30, 40) comporte un doigt (38, 48) inséré dans un longeron (23) de ladite poutre (20).

8. Support selon l'une quelconque des revendications précédentes,
**caractérisé en ce que** ladite poutre (20) comporte au moins une lumière (24) apte à accueillir un équipement (6) optionnel.

9. Support selon la revendication 8,
**caractérisé en ce qu'**il comporte une bague de soutien qui coopère avec ladite lumière.

10. Support selon la revendication 9,
**caractérisé en ce que** ladite poutre (20) comporte au moins un longeron (23) qui délimite ladite lumière (24), ce longeron étant fixé de manière amovible à un moyen de fixation (30, 40).

11. Support selon l'une quelconque des revendications précédentes,
**caractérisé en ce que** ladite poutre (20) est au moins partiellement creuse afin de pouvoir enserrer en son sein des câblages électriques aptes à être reliés audit équipement (6) optionnel.

12. Aéronef (1) muni d'un premier et d'un deuxième cadres porteurs (2, 3) d'un fuselage (5), chaque cadre porteur (2, 3) étant contenu dans un plan en élévation (P1, P2) de l'aéronef, un premier montant en élévation (8) du premier cadre porteur (2) et un deuxième montant en élévation (9) du deuxième cadre porteur (3) étant disposés de part et d'autre d'une ouverture (4) dudit fuselage (5) donnant sur un milieu extérieur (EXT) à l'aéronef (1), le premier montant en élévation (8) s'étendant d'une première partie inférieure (2') située à une base (4') de ladite ouverture (4) vers une première partie supérieure (2") située à un sommet (4") de ladite ouverture (4), le deuxième montant en élévation (9) s'étendant d'une deuxième partie inférieure (3') située à la base (4') de ladite ouverture (4) vers une deuxième partie supérieure (3") située au sommet (4") de ladite ouverture (4),
**caractérisé en ce qu'**il comporte un support (10) amovible d'un équipement (6) optionnel selon l'une quelconque des revendications 1 à 11, ledit support (10) comportant une poutre (20) allongée munie d'au moins un point d'accrochage d'un équipement et s'étendant d'une première portion extrémale (21) vers une deuxième portion extrémale (22), ce support (10) étant pourvu d'un premier moyen de fixation (30) muni d'un premier bras de fixation (31) lié à un premier bras de liaison (32) qui est fixé de manière amovible à ladite première portion extrémale (21) et d'un deuxième moyen de fixation (40) muni d'un deuxième bras de fixation (41) lié à un deuxième bras de liaison (42) qui est fixé de manière amovible à ladite deuxième portion extrémale (22), une première bielle de soutien (34) reliant de plus le premier bras de fixation (31) au premier bras de liaison (32) et une deuxième bielle de soutien (44) reliant le deuxième bras de fixation (41) au deuxième bras de liaison (42), le premier bras de fixation (31) étant fixé de manière amovible à la première partie supérieure (2") et le deuxième bras de fixation (41) étant fixé à la deuxième partie supérieure (3") afin que la poutre (20) s'étende en regard dudit sommet (4") de l'ouverture (4),
et **en ce qu'**au moins une bielle de soutien (34, 44) d'un moyen de fixation est articulée d'une part au bras de fixation (31, 41) et d'autre part au bras de liaison (32, 42) de ce moyen de fixation, ledit bras de fixation (31, 41) s'étendant d'une première extrémité distale (31', 41') vers une première extrémité proximale (31", 41"), le bras de liaison (32, 42) comportant une deuxième extrémité proximale (32", 42") articulée à ladite première extrémité proximale (31", 41") et une deuxième extrémité distale (32', 42') fixée de manière amovible à ladite poutre (20), ladite bielle de soutien (34, 44) est articulée d'une part au bras de fixation (31, 41) entre ladite première extrémité distale (31', 41') et ladite première extrémité proximale (31", 41") et d'autre part au bras de liaison (32, 42) entre ladite deuxième extrémité proximale (32", 42") et ladite deuxième extrémité distale (32', 42') fixée de manière amovible à ladite poutre (20).

## Patentansprüche

1. Abnehmbarer Träger (10) für eine optionale Ausrüstung (6) eines Luftfahrzeugs (1), wobei der Träger (10) einen länglichen Balken (20) aufweist mit mindestens einem Ankopplungspunkt für eine Ausrüstung und sich von einem ersten Endbereich (21) bis zu einem zweiten Endbereich (22) erstreckt, wobei dieser Träger (10) mit einem ersten Befestigungsmittel (30) versehen ist, welches einen ersten Befestigungsarm (31) aufweist, der mit einem ersten Verbindungsarm (32) verbunden ist, der abnehmbar an dem ersten Endbereich (21) befestigt ist, und mit einem zweiten Befestigungsmittel (40) versehen ist, welches einen zweiten Befestigungsarm (41) aufweist, der mit einem zweiten Verbindungsarm (42) verbunden ist, der abnehmbar an dem zweiten Endbereich (22) befestigt ist, wobei eine erste Stützstrebe (34) außerdem den ersten Befestigungsarm (31) mit dem ersten Verbindungsarm (32) verbindet, und eine zweite Stützstrebe (44) den zweiten Befestigungsarm (41) mit dem zweiten Verbindungsarm (42) verbindet, wobei mindestens eine Stützstrebe (34, 44) eines Befestigungsmittels einerseits an dem Befestigungsarm (31, 41) und andererseits an dem Verbindungsarm (32, 42) des Verbindungsmittels angelenkt ist, wobei sich der Befestigungsarm (31, 41) von einem ersten distalen Ende (31', 41') bis zu einem ersten proximalen Ende (31", 41") erstreckt,
**dadurch gekennzeichnet, dass** der Verbindungsarm (32, 42) ein zweites proximales Ende (32", 42") aufweist, welches an dem ersten proximalen Ende des Befestigungsarms (31", 41") angelenkt ist, und ein zweites distales Ende (32', 42'), welches abnehmbar an dem Balken (20) befestigt ist, wobei die Stützstrebe (34, 44) einerseits am Befestigungsarm (31, 41) zwischen dem ersten distalen Ende (31', 41') und dem ersten proximalen Ende (31", 41") und andererseits am Verbindungsarm (32, 42) zwischen dem zweiten proximalen Ende (32", 42") und dem zweiten distalen Ende (32', 42'), welches abnehmbar an dem Balken (20) befestigt ist, angelenkt ist.

2. Träger nach Anspruch 1,
**dadurch gekennzeichnet, dass** mindestens ein Befestigungsmittel (30) ein zusätzliches Ankopplungsmittel (33) aufweist.

3. Träger nach einem der vorstehenden Ansprüche,
**dadurch gekennzeichnet, dass** der Befestigungsarm (31, 41) eines Befestigungsmittels am Verbindungsarm (32, 42) dieses Befestigungsmittels angelenkt ist.

4. Träger nach Anspruch 3,
**dadurch gekennzeichnet, dass** der Befestigungsarm (31) eines Befestigungsmittels (30) am Verbindungsarm (32) dieses Befestigungsmittels durch ein Verbindungsgelenk angelenkt ist, das mit einer Buchse (35"') versehen ist, die ein kugeliges Element (35') entlang einer Verbindungsachse (AX) durchquert, wobei das Verbindungsgelenk eine Bewegung des Befestigungsarms über eine vorgegebene maximale Distanz relativ zu dem Verbindungsarm (32) entlang der Verbindungsachse (AX) erlaubt.

5. Träger nach einem der vorstehenden Ansprüche,
**dadurch gekennzeichnet, dass** mindestens eine Stützstrebe sich über eine einstellbare Distanz erstreckt.

6. Träger nach einem der Ansprüche 1 bis 5,
**dadurch gekennzeichnet, dass** er mindestens eine Verstärkung (50) eines Rahmens aufweist, die in einem Trägerrahmen (2, 3) angeordnet werden kann, wobei die Verstärkung (50) mit einem Befestigungsarm (31, 41) eines Befestigungsmittels (30, 40) zusammenwirkt.

7. Träger nach einem der vorstehenden Ansprüche,
**dadurch gekennzeichnet, dass** mindestens ein Befestigungsmittel (30, 40) einen Finger (38, 48) aufweist, der in einen Längsträger (23) des Balkens (20) eingefügt ist.

8. Träger nach einem der vorstehenden Ansprüche,
**dadurch gekennzeichnet, dass** der Balken (20) mindestens eine Öffnung (24) aufweist, die eine optionale Ausrüstung (6) aufnehmen kann.

9. Träger nach Anspruch 8,
**dadurch gekennzeichnet, dass** er einen Haltering aufweist, der mit der Öffnung zusammenwirkt.

10. Träger nach Anspruch 9,
**dadurch gekennzeichnet, dass** der Balken (20) mindestens einen Längsträger (23) aufweist, der die Öffnung (24) eingrenzt, wobei dieser Längsträger abnehmbar an einem Befestigungsmittel (30, 40) befestigt ist.

11. Träger nach einem der vorstehenden Ansprüche,
**dadurch gekennzeichnet, dass** der Balken (20) zumindest teilweise hohl ist, um in seinem Inneren eine elektrische Verkabelung zu umschließen, die mit der optionalen Ausrüstung (6) verbindbar ist.

12. Luftfahrzeug (1) mit einem ersten und einem zweiten Trägerrahmen (2, 3) eines Rumpfs (5), wobei jeder Trägerrahmen (2, 3) in einer vertikalen Ebene (P1, P2) des Luftfahrzeugs liegt, wobei ein erster vertikaler Pfosten (8) des ersten Trägerrahmens (2) und ein zweiter vertikaler Pfosten (9) des zweiten Trägerrahmens (3) zu beiden Seiten einer Öffnung (4) des Rumpfs (5) angeordnet sind, die vom Luftfahrzeug (1) nach draußen (EXT) führt, wobei sich der erste vertikale Pfosten (8) ausgehend von einem ersten unteren Bereich (2'), der an einer Basis (4') der Öffnung (4) gelegen ist, zu einem ersten oberen Bereich (2") erstreckt, der am höchsten Teil (4") der Öffnung (4) gelegen ist, wobei der zweite vertikale Pfosten (9) sich von einem zweiten unteren Bereich (3') aus, der an der Basis (4') der Öffnung (4) gelegen ist, bis zu einem zweiten oberen Bereich (3") erstreckt, der am höchsten Teil (4") der Öffnung (4) gelegen ist,
**dadurch gekennzeichnet, dass** das Luftfahrzeug einen abnehmbaren Träger (10) einer optionalen Ausrüstung (6) nach einem der Ansprüche 1 bis 11 aufweist, wobei der Träger (10) einen langgestreckten Balken (20) aufweist, der mit mindestens einem Ankopplungspunkt einer Ausrüstung versehen ist und sich von einem Endbereich (21) bis zu einem zweiten Endbereich (22) erstreckt, wobei der Träger (10) mit einem ersten Befestigungsmittel (30) versehen ist, welches einen ersten Befestigungsarm (31) aufweist, der mit einem ersten Verbindungsarm (32) verbunden ist, der abnehmbar an dem ersten Endbereich (21) befestigt ist und der mit einem zweiten Befestigungsmittel (40) versehen ist, das einen zweiten Befestigungsarm (41) aufweist, der mit einem zweiten Verbindungsarm (42) verbunden ist, der abnehmbar an dem zweiten Endbereich (22) befestigt ist, wobei eine erste Stützstrebe (34) außerdem den ersten Befestigungsarm (31) mit dem ersten Verbindungsarm (32) verbindet, und wobei eine zweite Stützstrebe (44) den zweiten Befestigungsarm (41) mit dem zweiten Verbindungsarm (42) verbindet, wobei der erste Befestigungsarm (31) abnehmbar an dem oberen Bereich (2") befestigt ist und der zweite Befestigungsarm (41) am zweiten oberen Bereich (3") befestigt ist, damit sich der Balken (20) gegenüber dem höchsten Teil (4") der Öffnung (4) erstreckt, und
dadurch, dass mindestens eine Stützstrebe (34, 44) eines Befestigungsmittels einerseits am Befestigungsarm (31, 41) und andererseits am Verbindungsarm (32, 42) dieses Befestigungsmittels angelenkt ist, wobei sich der Befestigungsarm (31, 41) von einem ersten distalen Ende (31', 41') zu einem ersten proximalen Ende (31", 41") erstreckt, und der Verbindungsarm (32, 42) ein zweites proximales Ende (32", 42") aufweist, das an dem ersten proximalen Ende (31", 41") und an einem zweiten distalen Ende (32', 42') angelenkt ist, welches abnehmbar an dem Balken (20) befestigt ist, wobei die Stützstrebe (34, 44) einerseits an dem Befestigungsarm (31, 41) zwischen dem ersten distalen Ende (31', 41') und dem ersten proximalen Ende (31", 41") und andererseits am Verbindungsarm (32, 42) zwischen dem zweiten proximalen Ende (32", 42") und dem zweiten distalen Ende (32', 42') angelenkt ist, welches abnehmbar an dem Balken (20) befestigt ist.

## Claims

1. A removable support (10) for optional equipment (6) of an aircraft (1),
said support (10) comprising an elongate beam (20) provided with at least one point of attachment for equipment and extending from a first end portion (21) to a second end portion (22), this support (10) is provided with a first fastening means (30) provided with a first fastening arm (31) connected to a first connecting arm (32) which is fastened removably to said first end portion (21), and with a second fastening means (40) provided with a second fastening arm (41) connected to a second connecting arm (42) which is fastened removably to said second end portion (22), a first supporting rod (34) furthermore connecting the first fastening arm (31) to the first connecting arm (32) and a second supporting rod (44) connecting the second fastening arm (41) to the second connecting arm (42),
at least one supporting rod (34, 44) of a fastening means being articulated on one hand to the fastening arm (31, 41) and on the other hand to the connecting arm (32, 42) of this fastening means, said fastening arm (31, 41) extending from a first distal end (31', 41') to a first proximal end (31", 41"),
**characterised in that** the connecting arm (32, 42) comprises a second proximal end (32", 42") articulated to said first proximal end (31", 41") of the fastening arm and a second distal end (32', 42') which is fastened removably to said beam (20), said supporting rod (34, 44) being articulated on one hand to the fastening arm (31, 41) between said first distal end (31', 41') and said first proximal end (31", 41") and on the other hand to the connecting arm (32, 42) between said second proximal end (32", 42") and said second distal end (32', 42') which is fastened removably to said beam (20).

2. A support according to Claim 1, **characterised in that** at least one fastening means (30) comprises an additional attachment means (33).

3. A support according to any one of the preceding claims, **characterised in that** the fastening arm (31, 41) of a fastening means is articulated to the connecting arm (32, 42) of this fastening means.

4. A support according to Claim 3, **characterised in that** the fastening arm (31) of a fastening means (30) is articulated to the connecting arm (32) of this fastening means by an assembly articulation provided with a bush (35"') which passes through a spherical element (35') along an assembly axis (AX), said assembly articulation accommodating a movement over a given maximum distance of said fastening arm (31) relative to said connecting arm (32) along said assembly axis (AX).

5. A support according to any one of the preceding claims, **characterised in that** at least one supporting rod extends over an adjustable distance.

6. A support according to any one of Claims 1 to 5, **characterised in that** it comprises at least one frame reinforcement (50) capable of being arranged in a carrier frame (2, 3), said reinforcement (50) cooperating with a fastening arm (31, 41) of a fastening means (30, 40).

7. A support according to any one of the preceding claims, **characterised in that** at least one fastening means (30, 40) comprises a finger (38, 48) inserted into a longitudinal member (23) of said beam (20).

8. A support according to any one of the preceding claims, **characterised in that** said beam (20) comprises at least one hole (24) capable of receiving optional equipment (6).

9. A support according to Claim 8, **characterised in that** it comprises a supporting ring which cooperates with said hole.

10. A support according to Claim 9, **characterised in that** said beam (20) comprises at least one longitudinal member (23) which defines said hole (24), this longitudinal member being fastened removably to a fastening means (30, 40).

11. A support according to any one of the preceding claims, **characterised in that** said beam (20) is at least partially hollow in order to be able to enclose within it electrical cabling which is capable of being connected to said optional equipment (6).

12. An aircraft (1) provided with a first and a second carrier frame (2, 3) of a fuselage (5), each carrier frame (2, 3) being contained in a plane in elevation (P1, P2) of the aircraft, a first upright in elevation (8) of the first carrier frame (2) and a second upright in elevation (9) of the second carrier frame (3) being arranged on either side of an opening (4) in said fuselage (5) which leads to an environment (EXT) on the outside of the aircraft (1), the first upright in elevation (8) extending from a first lower part (2') located at a base (4') of said opening (4) to a first upper part (2") located at a top (4") of said opening (4), the second upright in elevation (9) extending from a second lower part (3') located at the base (4') of said opening (4) to a second upper part (3") located at the top (4") of said opening (4),
**characterised in that** it comprises a removable support (10) for optional equipment (6) according to any one of Claims 1 to 11, said support (10) comprising an elongate beam (20) provided with at least one point of attachment for equipment and extending from a first end portion (21) to a second end portion (22), this support (10) being provided with a first fastening means (30) provided with a first fastening arm (31) connected to a first connecting arm (32) which is fastened removably to said first end portion (21), and with a second fastening means (40) provided with a second fastening arm (41) connected to a second connecting arm (42) which is fastened removably to said second end portion (22), a first supporting rod (34) furthermore connecting the first fastening arm (31) to the first connecting arm (32) and a second supporting rod (44) connecting the second fastening arm (41) to the second connecting arm (42), the first fastening arm (31) being fastened removably to the first upper part (2") and the second fastening arm (41) being fastened to the second upper part (3") so that the beam (20) extends facing said top (4") of the opening (4),
and **in that** at least one supporting rod (34, 44) of a fastening means is articulated on one hand to the fastening arm (31,41) and on the other hand to the connecting arm (32, 42) of this fastening means, said fastening arm (31, 41) extending from a first distal end (31', 41') to a first proximal end (31", 41"), the connecting arm (32, 42) comprising a second proximal end (32", 42") articulated to said first proximal end (31", 41") and a second distal end (32', 42') which is fastened removably to said beam (20), said supporting rod (34, 44) is articulated on one hand to the fastening arm (31, 41) between said first distal end (31', 41') and said first proximal end (31", 41") and on the other hand to the connecting arm (32, 42) between said second proximal end (32", 42") and said second distal end (32', 42') which is fastened removably to said beam (20).
